# EUROPÄISCHE PATENTSCHRIFT

(11) **EP 1 118 861 B1**
(45) Veröffentlichungstag und Bekanntmachung des Hinweises auf die Patenterteilung: **10.08.2005**
(21) Anmeldenummer: 01100717.6
(22) Anmeldetag: 12.01.2001
(51) Int. Cl.: B01L 11/00, G01N 35/10

(54) **Analysenvorrichtung mit vertikal bewegbarer Wascheinrichtung**
Analysis device with vertically movable washing apparatus
Dispositif d'analyse avec appareil de lavage verticalement mobile

(30) Priorität: 19.01.2000 DE 10001895
(43) Veröffentlichungstag der Anmeldung: 25.07.2001
(73) Patentinhaber: Mettler-Toledo GmbH, 8606 Greifensee (CH)
(72) Erfinder: Lang, Karl, 8645 Jona (CH)

(56) Entgegenhaltungen:
- EP-A- 0 602 802
- EP-A- 0 725 279
- EP-A- 0 800 073
- EP-A- 0 866 336
- WO-A-97/35173
- US-A- 4 318 885

## Beschreibung

Die Erfindung bezieht sich auf eine Analysenvorrichtung nach dem Oberbegriff des Anspruches 1. Mit derartigen Analysenvorrichtungen werden im allgemeinen Titrierungen durchgeführt, doch ist die Erfindung nicht auf solche beschränkt, sondern erstreckt sich allgemein auf solche Analysenvorrichtungen, bei denen wenigstens ein, insbesondere längliches, Gerät, wie ein Röhrchen zur Zugabe eines Additivs oder zur Absaugung einer Probe, insbesondere aber Gerät, nach Durchführung der Analyse gewaschen werden muß. Wenn hier von einem länglichen Gerät die Rede ist, so kann darunter auch ein solches anderer Form, aber auf einem länglichen Träger verstanden werden.

Derartige Analysenvorrichtungen sind in verschiedener Art am Markte. Bei einer dieser Vorrichtungen ist ein Düsenkranz in Form eines etwa zentral angeordneten Segner'schen Wasserrades vorgesehen, das die Waschflüssigkeit unter Drehung nach außen versprüht. Damit können zwar auch mehrere Geräte relativ intensiv und an verschiedenen Flächenbereichen besprüht werden, doch ist kaum zu vermeiden, daß Waschflüssigkeit auch über das Gerät hinausgelangt und dann zu Verschmutzungen außerhalb eines Meßglases führen könnte; deshalb werden derartige Waschungen stets innerhalb des eine Probeflüssigkeit enthaltenden Meßglases durchgeführt, wodurch aber nur ein Teil des in diese Flüssigkeit eingetauchten Gerätes, wie insbesondere mindestens einer Meßelektrode, gereinigt werden kann.

Die WO 97/35173 A2 offenbart eine stationäre Waschvorrichtung für Pipetten und Rührer. Die Gegenstände werden in einem Bassin gereinigt, welches mit einer Waschflüssigkeit gefüllt ist und einen Ablauf sowie einen Zulauf aufweist. Der Zulauf ist dergestalt, dass mindestens ein Zuführkanal in mindestens einer Düse endet und so die zu reinigenden Gegenstände besprüht werden können. Die zu reinigende Pipette oder Rührer sind an einem Antriebsarm befestigt, welcher sowohl eine Rotationsbewegung als auch eine Translationsbewegung ausführen kann, und werden von diesem zur Waschvorrichtung gebracht.

Die EP 0 725 279 A1 offenbart eine ebenfalls stationäre Waschvorrichtung mit einem schmalen, länglichen Waschtrog, welcher wiederum einen Zu- und einen Ablauf aufweist. Die zu reinigenden Gegenstände werden in die Waschvorrichtung eingebracht und durch Einleiten einer Waschflüssigkeit durch mehrere Öffnungen gereinigt. Die verbrauchte Waschflüssigkeit wird unten wieder aus dem Waschtrog abgepumpt.

Die US 4,318,885 offenbart eine Waschvorrichtung durch die die zu reinigenden Gegenstände hindurchragen. Die Waschflüssigkeit wird durch ein Pumpsystem von oben nach unten durch eine den Gegenstand umgebende Vorrichtung geleitet und durch einen entsprechenden Unterdruck wieder am unteren Ende der Vorrichtung abgepumpt.

Zwar ist es ebenfalls bekannt, den Gerätehalter selbst mit mehreren Durchstecklöchern für längliche Geräte der oben erläuterten Art zu versehen und in jedem Durchsteckloch eine Waschdüse anzuordnen. Damit ist aber eine Besprühung verschiedener Flächenbereiche des Gerätes nicht mehr möglich, vielmehr gelangt die Waschflüssigkeit stets nur an eine Umfangsstelle des Gesamtumfanges des Gerätes, von wo dann die Waschflüssigkeit in Axialrichtung abwärts rinnt, so daß beim Herausziehen der länglichen Geräte auch deren ganze Länge, aber nur über einen beschränkten Umfangsbereich, besprüht werden kann.

In diesem letzteren Falle muß natürlich Waschflüssigkeit zu den einzelnen Durchstecklöchern herangeführt werden, und dies vermindert, auf dem sowieso schon begrenzt verfügbaren Raum, die Möglichkeit der Anbringung solcher Durchstecklöcher und damit die Zahl der möglicherweise unterzubringenden Geräte.

Somit liegt der Erfindung die Aufgabe zugrunde, eine Analysenvorrichtung der eingangs genannten Art so auszubilden, daß einerseits eine wirksame Waschung erfolgen kann, und daß anderseits die Gefahr eines Versprühens von Waschflüssigkeit außerhalb eines Meßglases nicht gegeben ist. Erfindungsgemäß wird diese Aufgabe dadurch gelöst, daß die Wascheinrichtung an einem vom Gerätehalter gesonderten und relativ zu ihm bewegbaren, das jeweilige vom Gerätehalter gehaltene Gerät umrundenden Waschring mit mindestens einer gegen das jeweilige, eine Öffnung des Waschringes durchsetzende Gerät gerichteter Waschdüse angeordnet ist.

Dadurch, daß nun Gerätehalter und Waschring zwei gesonderte Teile sind, kann ähnlich der bekannten Lösung mit dem Segner'schen Wasserrad, eine intensive Waschung durchgeführt werden. Der Waschring selbst braucht dabei nicht unbedingt ein geschlossener Ring über 360° sein, obwohl dies im Rahmen der Erfindung bevorzugt ist. Dadurch aber, daß mindestens eine gegen das jeweilige, eine Öffnung des Waschringes durchsetzende Gerät gerichtete Waschdüse an dem das Gerät umrundenden Waschring, d.h. mindestens eine radial nach innen gerichtete Waschdüse, vorgesehen ist, ist ein Verspritzen der Waschflüssigkeit nach außen und eine unerwünschte Verunreinigung nicht mehr zu befürchten, und die Waschung kann daher auch außerhalb eines Meßglases, und damit noch intensiver, gegebenenfalls auch in kürzerer Zeit, stattfinden.

Es wurde oben gesagt, daß Gerätehalter und Waschring erfindungsgemäß zwei gesonderte Teile sind. Diese gesonderten Teile könnten im Rahmen der Erfindung auch gesonderte Führungen besitzen, um relativ zueinander bewegbar zu sein. Bevorzugt ist es jedoch, wenn der Waschring ebenfalls an der Vertikalführung des Gerätehalters geführt ist, weil sich so ein geringerer Platzbedarf und überdies eine konstruktive Vereinfachung ergibt.

Auch wäre es denkbar, den Waschring mit schräg abwärts gerichteten Düsen in der Ebene des Gerätehalters oder sogar leicht darüber anzuordnen. Die bevorzugte Lösung ist es aber, daß der Waschring unterhalb des Gerätehalters angeordnet ist.

Ähnlich der bekannten Lösung mit dem Segner'schen Wasserrad könnte eine einzige, rund um das mindestens eine Gerät angetriebene, z.B., ebenfalls als Segner'sches Wasserrad ausgebildete, d.h. mehr oder weniger leicht tangential gerichtete, Waschdüse vorgesehen werden. Ganz gleich aber, ob die Waschdüse bewegbar oder stationär ist, wird ein besserer Wascheffekt dann erzielt, wenn der Waschring mit mindestens zwei über seinen Umfang verteilten Waschdüsen versehen ist. Diese können einander im wesentlichen gegenüberliegen bzw. in gleichem Winkelabstand voneinander angeordnet sein. Wie später aber noch beschrieben wird, kann die Verteilung der Waschdüsen über den Umfang der zu spülenden länglichen Geräte auch über zwei Waschringe derart erfolgen, daß der eine einen Teil, z.B. die Hälfte, des Umfanges von Geräten besprüht, der andere den anderen Teil.

Um einen möglichst gleichmäßigen Wascheffekt über alle Flächenteile zu erhalten, ist es vorteilhaft, wenn die Düsen am Waschring einen Winkelabstand von mindestens 10° und weniger als 180°, vorzugsweise von 15 bis 20°, besitzen. Das bedeutet natürlich eine Vielzahl von Düsen, die in einem Winkelabstand von weniger als 180° angeordnet werden.

Bei der bekannten Konstruktion mit in einer Durchstecköffnung des Gerätehalters angeordneten Waschdüse besteht nicht zuletzt das Problem, daß sich der Strahl der Waschflüssigkeit praktisch nicht aufweiten kann und deshalb relativ konzentriert an einer einzigen Umfangsstelle austritt und in Achsrichtung des Gerätes abwärts fließt. Dieses Problem wird erfindungsgemäß dadurch gelöst, daß die mindestens eine Waschdüse des Waschringes an einem die vom Gerät durchsetzte Öffnung übersteigenden Durchmesser angeordnet ist. Dadurch sprüht die jeweilige Waschdüse aus einer gewissen Entfernung auf das Gerät, was nicht nur ein Aufweiten des Strahles und damit einen besseren Wascheffekt ermöglicht, sondern gleichzeitig auch einen schärferen Strahl (höheren Druck) zuläßt, ohne daß die Gefahr des Besprühens und Verunreinigens von Flächen, die eigentlich nicht mit der Waschflüssigkeit in Berührung kommen sollen. Das letztere kann aber auch vermieden werden, wenn zusätzlich oder alternativ die mindestens eine Waschdüse des Waschringes nicht nur radial einwärts, sondern auch um einen vorbestimmten Winkel abwärts gerichtet ist.

Bei solchen Waschdüsen bestehen einander widersprüchliche Anforderungen. Einerseits sollen sie möglichst fein sein, um einen feinen Strahl, gut verteilt, auf das jeweilige Gerät zu bringen. Anderseits aber ist die Gefahr der Verstopfung durch Verkalkung und Verschmutzung um so größer, je kleiner der Düsenquerschnitt ist. Erfindungsgemäß wurde gefunden, daß ein optimaler Kompromiß dann erhalten wird, wenn die mindestens eine Waschdüse des Waschringes einen Mindestdurchmesser von 0,3 mm, vorzugsweise von 0,5 mm, insbesondere einen Durchmesser von 0,5 bis 0,8 mm, besitzt.

Es sei auf die oben erwähnte Schwierigkeit bei Waschdüsen in den Durchstecköffnungen hingewiesen, sie entsprechend mit Waschflüssigkeit zu versorgen; das Resultat war eine Limitierung der Zahl der Durchstecköffnungen. Erfindungsgemäß aber können sehr viele Waschdüsen vorgesehen werden, und dabei ist es vorteilhaft, wenn der Waschring mit mindestens einem, seinem Umfang entlang laufenden, an die Zufuhreinrichtung angeschlossenen Verteilkanal für die Waschflüssigkeit versehen ist. Dieser Verteilkanal wird bevorzugt als Ringkanal ausgebildet sein, insbesondere wenn sich der Waschring über 360° erstreckt.

Ein solcher Verteilkanal ist in der Herstellung besonders einfach, wenn er einen gleichmäßigen Querschnitt über seine Länge aufweist. Es kann aber der Druck zu einzelnen Düsen beeinflußt werden, wenn der Querschnitt über die Länge unterschiedlich ist. Insbesondere kann damit erreicht werden, daß den am Ende des Verteilkanals vorgesehenen Waschdüsen derselbe Druck zugeführt wird, wie denen am Anfang, d.h. nahe der Zuleitung. In diesem Sinne ist es zu verstehen, wenn erfindungsgemäß bevorzugt ist, wenn der *durchschnittliche* Querschnitt des Verteilkanals gegenüber dem der mindestens einen Düse größer ist, vorzugsweise in einem Verhältnis von wenigstens 5:1, insbesondere in einem Verhältnisbereich von 10:1 bis 50:1.

Die Zufuhr von Waschflüssigkeit von einem Waschflüssigkeitsvorrat kann an sich beliebig erfolgen. Beispielsweise könnte der Waschring einen radial abstehenden Nippel oder kleinen Stutzen aufweisen, an den ein Zufuhrschlauch aufgesteckt werden kann. Dies mag aber unter Umständen einen radialen Zug bedeuten. Anderseits sind die genannten länglichen Geräte an solchen Analysenvorrichtungen im allgemeinen mit nach oben ragenden Leitungen versehen, schon um einen "Leitungssalat" zu vermeiden. Insofern ist es im Rahmen der Erfindung günstig, wenn die Zufuhreinrichtung einen mindestens teilweise etwa parallel zur vertikalen Bewegungsrichtung erstreckten Zufuhrkanal aufweist.

Es wäre im Rahmen der Erfindung durchaus möglich, an einer Vertikalführung auch mehrere Gerätehalter vorzusehen und diesen jeweils einen Waschring zuzuordnen. Bevorzugt ist es jedoch, wenn der Gerätehalter Halter für wenigstens zwei solcher Geräte aufweist, die der Waschring gemeinsam umgibt.

Zur Automatisierung der Arbeit ist der Gerätehalter mittels eines Antriebes entlang der Vertikalführung bewegbar. Der Waschring könnte dabei einen gesonderten Antrieb aufweisen, da es sowieso günstig sein wird, diesen beiden Teilen unterschiedliche Bewegungen aufzuprägen. Zur konstruktiven Vereinfachung ist es aber vorteilhaft, wenn der Waschring mittels desselben Antriebes vertikal bewegbar ist.

Beispielsweise könnte ein hinsichtlich der Drehrichtung umschaltbarer Motor mit in entgegengesetzten Drehrichtungen wirkenden Freilaufkupplungen vorgesehen sein, so daß er in der einen Richtung den Gerätehalter und in der anderen Richtung den Waschring antreibt. Dies bedeutet aber eine zeitlich aufeinanderfolgende Bewegung der beiden Teile und damit Zeitverlust. Zur Lösung dieses Problems ist nach einer Weiterbildung der Erfindung vorgesehen, daß Gerätehalter und Waschring untereinander durch wenigstens einen eine Relativbewegung zulassenden Mitnehmer verbunden sind, was eine besonders einfache Ausführung zur Erteilung unterschiedlicher Bewegungen, insbesondere relativ zueinander, ist.

Es ist klar, daß bei einer erfindungsgemäßen Analysenvorrichtung mehrere Vorgänge in einer bestimmten Abfolge abzulaufen haben, wie Aufstellen einer Probe, Heranführen des mindestens einen länglichen Gerätes, Messen, Waschen, Entfernen des Gerätes usw. Einerseits belastet eine solche Reihenfolge natürlich das Arbeitspersonal, anderseits ist es auch vom Standpunkt einer effizienteren Arbeit vorteilhaft, einen solchen Ablauf zu automatisieren. Daher ist auch eine Antriebsvorrichtung für eine Vorrichtung nach einem der vorhergehenden Ansprüche vorgesehen, die dadurch gekennzeichnet ist, daß sie mindestens einen von einer Programmsteuereinrichtung gesteuerten Motor aufweist.

Konkret kann eine solche Antriebsvorrichtung dann so ausgebildet werden, daß sie einen Programmspeicher für die Durchführung wenigstens folgender Schritte aufweist:
a) Absenken von Gerätehalter und Waschring bis zu einer jeweils gewünschten Höhe;
b) Durchführung der Messung;
c) vertikales Relativbewegen des mindestens einen Gerätes am Gerätehalter gegenüber dem Waschring bei gleichzeitiger Zuführung von Waschflüssigkeit.

Dazu kann ein Meßwertaufnehmer vorgesehen werden, z.B. ein Speicher, ein Computer oder Prozessor, vorgesehen ist, der den Abschluß einer Messung überwacht und nach Durchführung des Schrittes b) ein Signal zur Auslösung des Schrittes c) abgibt.

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine perspektivische Darstellung eines ersten Ausführungsbeispieles einer erfindungsgemäßen Analysenvorrichtung ohne längliche Geräte;
- Fig. 2: eine Draufsicht auf eine bevorzugte Ausführung der erfindungsgemäßen Analysenvorrichtung im Sinne des Pfeiles II der Fig. 1 mit eingesetzten Geräten;
- Fig. 3: einen Schnitt nach der Linie III-III der Fig. 2;
- Fig. 4: einen Schnitt nach der Linie IV-IV der Fig. 2;
- Fig. 5: den Bewegungsablauf zur Veranschaulichung der einzelnen Programmschritte in Schritten a), b) und c) bei einer Schnittführung durch die Vorrichtung entsprechend der Linie V-V der Fig. 2; und
- Fig. 6: einen Schnitt ähnlich Fig. 3, jedoch eine Ausführungsvariante mit zwei Waschringen darstellend.

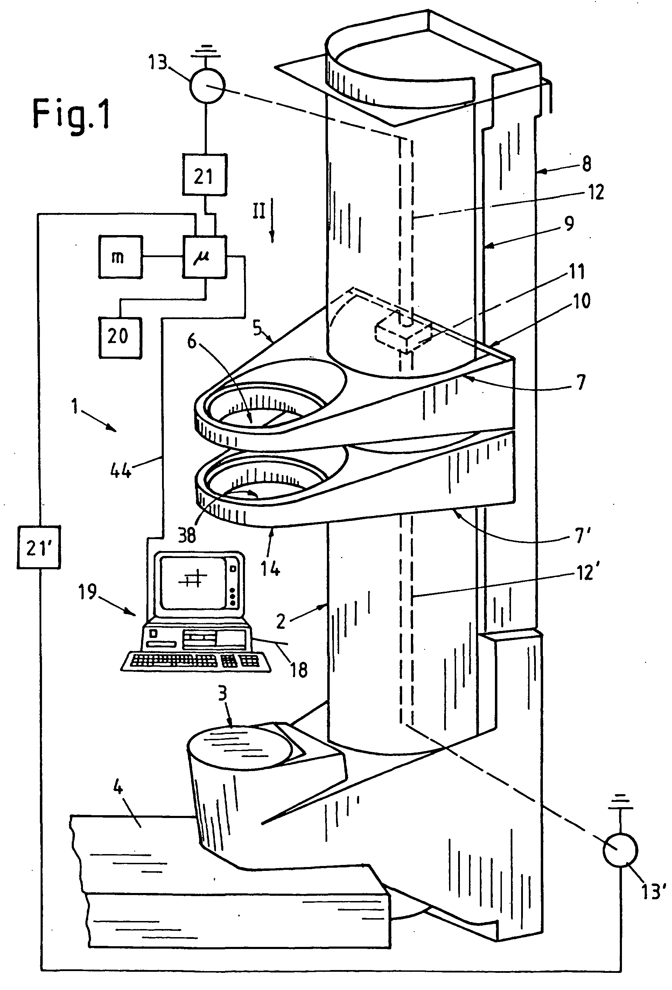

Fig. 1 zeigt ein Analysengerät 1, das eine Vertikalführung in Form einer Führungssäule 2 im Bereiche einer Probenfläche 3 und einen an der Unterseite vorstehenden Fuß 4 an sich beliebiger Bauweise zur Stabilisierung, gegebenfalls auch zum Abstellen von Geräten und/oder Proben, aufweist. Die Führungssäule 2 ist von einem sich etwa parallel zu ihr erstreckenden Ständer 8 gehalten. Zwischen Ständer 8 und Führungssäule 2 besteht ein Längsschlitz 9.

Entlang der vertikalen Führungssäule 2 ist ein Gerätehalter 5 auf- und abbewegbar. Dieser Gerätehalter 5 besitzt einen Haltering 6 und einen gegen die Führungssäule 2 abstehenden, die Führungssäule 2 halbringförmig umfassenden Bügelteil 7. Der Bügelteil 7 besitzt frei endende, die Führungssäule nach je einer Seite hin umgreifende Bügelarme, die an der Rückseite der Führungssäule 2 durch einen flachen Querbügel 10 miteinander verbunden sind. Dieser Querbügel 10 wird beispielsweise an die Enden der gabelartigen Arme des Bügelteiles 7 angeschraubt.

Wie strichliert in Fig. 1 angedeutet ist, ist der Querbügel 10 mit mindestens einer Mutter 11 verbunden. In diese Mutter ist eine innerhalb der Führungssäule 2 in nicht dargestellter Weise, aber in der gezeigten Lage gelagerte, z.B. über die halbe Höhe der Führungssäule 2 reichende Antriebsspindel 12 eingeschraubt, die durch einen lediglich schematisch angedeuteten Motor 13, gegebenenfalls mit einer nicht dargestellten Untersetzung, antreibbar ist. Der Motor 13 kann an sich ein beliebiger Motor, wie ein Gleichstrommotor, sein, ist aber vorzugsweise ein Schrittmotor. Es versteht sich aber, daß der Aufbau des Antriebes zum Heben und Senken von Gerätehalter 5 und Waschring 14 auf die unterschiedlichste Art gelöst werden kann, etwa mittels eines vertikalen Seil- oder Kettentriebes, eine Linearmotors, insbesondere eine Linear-Schrittmotors, eines Klinkenantriebes usw.

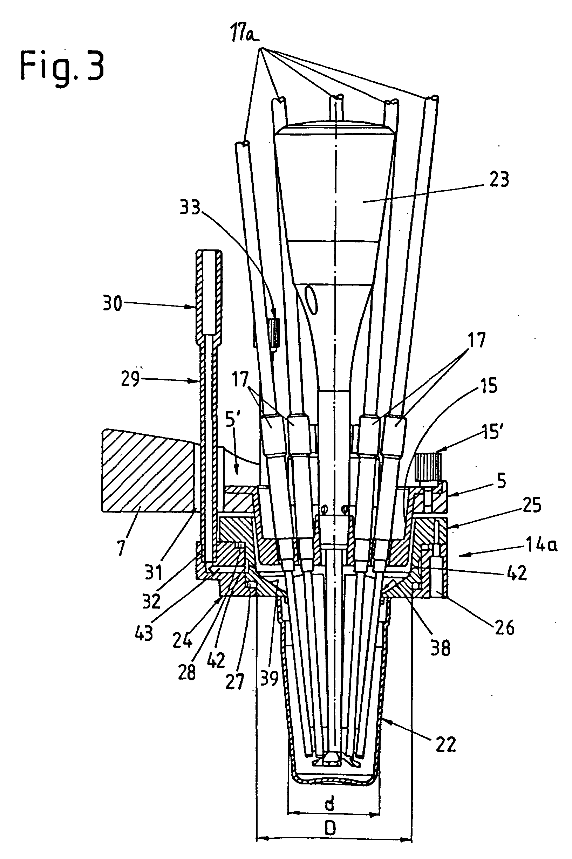

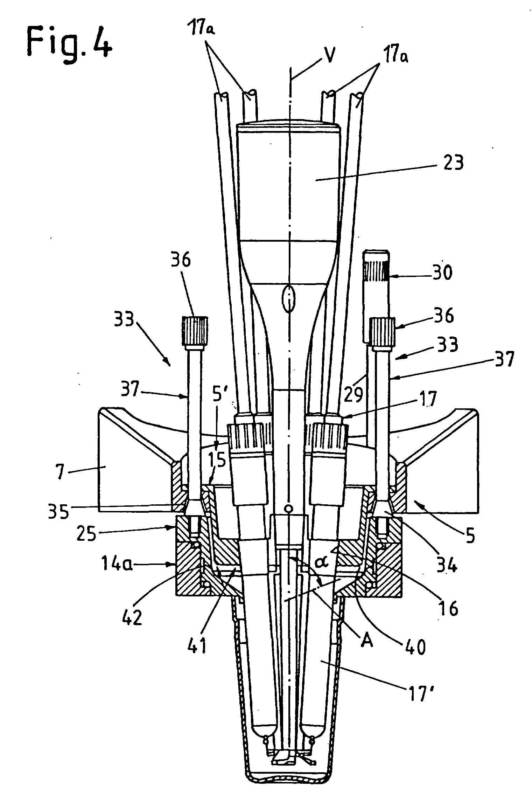

Unterhalb des Gerätehalters 5 ist ein separater Waschring 14 entlang der Führungssäule 2 bewegbar. Der Aufbau des Waschringes wird später an Hand des bevorzugten Ausführungsbeispieles der Fig. 3 und 4 im einzelnen beschrieben. Bei der Ausführung nach Fig. 1 ist er - grob gesprochen - in ähnlicher Weise bügelartig mit Bügelarmen 7' ausgebildet ist, wie der Gerätehalter 5. Wie später noch ersichtlich wird, ist es vorteilhaft, eine Relativbewegung zwischen dem Gerätehalter 5 und dem Waschring 14 vorzusehen. Insofern ist es nicht selbstverständlich, daß die beiden Teile 5, 14 an derselben Vertikalführung 2 angeordnet sind, und in der Tat wäre es auch möglich, für den Waschring 14 eine gesonderte, sich beispielsweise parallel zur Säule 2 erstreckende Vertikalführung vorzusehen. Dies brächte aber u.U. Synchronisierungsprobleme mit sich und jedenfalls einen zusätzlichen Platzbedarf, der auch die Sichtverhältnisse beeinträchtigen kann.

Für den Waschring 14 ist eine ähnliche Antriebsanordnung wie für den Gerätehalter 5 vorgesehen, d.h. eine Spindel 12', die von einem Motor 13' antreibbar ist. Die weitere Beschreibung wird aber zeigen, wie eine vertikale Bewegung eines Waschringes 14a mit einem einzigen Motor 13 hervorgerufen werden kann.

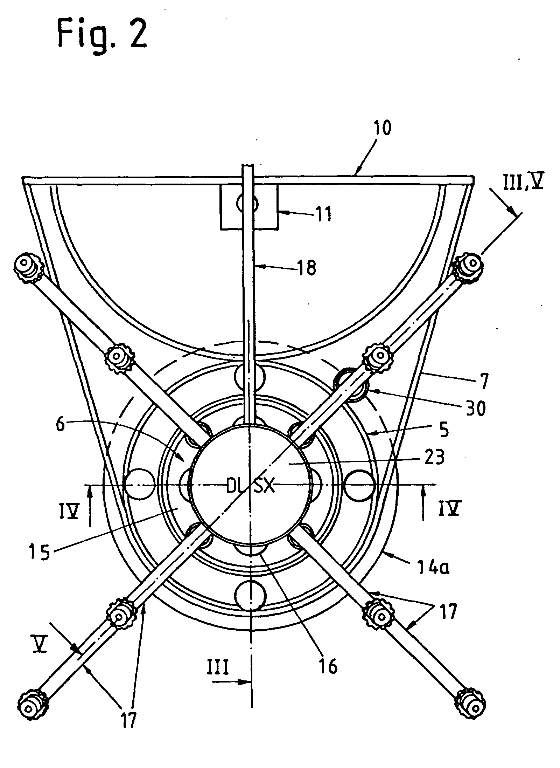

In die Öffnung 6 des Gerätehalters 5 ist ein becherförmiger Haltering 15 (Fig. 2, 3) mit Durchstecklöchern 16 mit Hilfe eines am Haltering 15 in der aus Fig. 3 und 4 ersichtlichen Weise, insbesondere mittig, befestigten Handhabeknopfes 23 einsetzbar, in welche verschiedene längliche Geräte, im vorliegenden Falle acht Röhrchen 17, gegebenenfalls aber auch Pipetten oder Meßelektroden, eingesetzt werden können. Der Haltering 15 ist mittels Befestigungsschrauben 15' an dem die Öffnung 6 umgebenden Teil des Gerätehalters 5 in einer Vertiefung 5' festgeschraubt. Wie Fig. 3 zeigt, ragt dieser becherförmige Haltering 15 unter die untere Ebene des Gerätehalters 5 vor. Die Meßsignale der Meßelektroden 17 werden über mindestens ein Kabel 18 an einen auswertenden Computer 19 (Fig. 1) gesandt, das die Signale aus einzelnen Elektrodenkabeln 17a (Fig. 3) weiterleitet. Es versteht sich, daß die Meßelektroden oder Röhrchen 17 auch durch andere Halteeinrichtungen in ihrer Lage gehalten werden könnten, doch hat sich die Verwendung eines Halteringes 15 bewährt.

Dieser Computer 19, gegebenenfalls zusammen mit einem Mikroprozessor µ steuert den später beschriebenen Ablauf eines Meßprogrammes, das in einem Speicher m enthalten ist, und dessen Ablauf auf die verschiedenste Weise, wie etwa mit Positionssensoren für die jeweilige Lage von Probe, Waschring 14 und/oder Gerätehalter 5, bevorzugt aber zeitabhängig über einen Taktgenerator 20, gesteuert werden kann. Das Ausgangssignal des Mikroprozessors µ wird dann einer Ansteuerstufe 21 für den Motor 13 und einer Ansteuerstufe 21' für den Motor 13' zugeführt, der eine Spindel 12' antreibt. Es wäre auch denkbar, eine einzige Spindel 12 bzw. 12', z.B. mit einander entgegengesetzten Gewindegängen für die oben erwähnten unterschiedlichen und jeweils über eine im entgegengesetzten Sinne zur anderen wirkende Freilaufkupplung anzutreiben. Schließlich könnte auch eine einzige Spindel im Zusammenwirken mit wahlweise in ihre Gewindegänge einkuppelbaren Gegengewinden, beispielsweise einer in einen Gewindegang eingreifenden, aushebbaren Blattfeder, vorgesehen werden.

Fig. 3 zeigt Gerätehalter 5 und Waschring 14 in Meßposition an einem Probenglas 22, das eine zu titrierende Flüssigkeit enthält. Die Erfindung ist aber keineswegs auf diese Anwendung beschränkt, wenn sie auch bevorzugt auf Titriergeräte angewandt wird. Es wäre etwa möglich, den Feuchtigkeitsgehalt fester Proben mittels entsprechender Meßfühler bzw. mit Hilfe von Meßelektroden zu bestimmen. Ebenso könnte ein Druckstift zur Härtebestimmung, etwa der Vickers-Härte, vorgesehen sein.

Besonders der Aufbau des Waschringes 14a gemäß einer bevorzugten Ausführungsform der Erfindung ist aus den Fig. 3 und 4 gut zu erkennen. Der Waschring 14a unterscheidet sich von dem der Fig. 1 dadurch, daß die Bügelarme 7' fehlen. Somit ist der Waschring 14a als bloßer Ring ohne Arme ausgebildet und, wie nachstehend erläutert wird, mit dem Gerätehalter relativ beweglich verbunden. Er besteht im wesentlichen aus einem Zuführring 24, der an der Unterseite eines Düsenringes 25 über Schrauben in Schraublöchern 26 befestigt ist, die im wesentlichen gleichmäßig über den Umfang verteilt sind. Zwischen Zuführring 24 und Düsenring 25 sind Dichtungen in Form von O-Ringen 27, 28 eingesetzt.

Der Zuführring 24 ist an einen sich im wesentlichen parallel zur vertikalen Bewegungsrichtung erstreckten Zufuhrkanal 29 für Waschflüssigkeit angeschlossen, der an seiner Oberseite ein verdicktes Ende 30 für den Anschluß eines die Waschflüssigkeit heranführenden (nicht gezeigten) Schlauches hat. Der Zufuhrkanal 29 durchsetzt eine Bohrung 31 des Gerätehalters 5 im Bereiche des Ansatzes eines der Bügelarme 7 (vgl. Fig. 2). An sich wäre es möglich, den Durchmesser dieser Bohrung 31 so klein auszubilden, daß der verbreiterte Kopf 30 des Zufuhrkanales 29 gleich als Mitnehmer für den Waschring 14a bei der vertikalen Bewegung des Gerätehalters 5 wirkt, doch ist dies deshalb nicht bevorzugt, weil dann beim Zerlegen der Zufuhrkanal 29 aus dem Zuführring 24 gezogen werden müßte, wo er besser abgedichtet (vgl. eine angedeutete Dichtungsmuffe 32) bleibt. Daher ist es günstiger, den Durchmesser der Bohrung 31 so zu wählen, daß der Kopf 30 leicht durch sie hindurchgezogen werden kann und damit die Aufgabe eines Mitnehmers einem separaten Teil zu übertragen. Ein solcher Mitnehmerteil ist in Fig. 3 als Mitnehmer 33 lediglich andeutungsweise zu sehen, aus Fig. 4 aber deutlich zu entnehmen.

Wie Fig. 4 zeigt, sind die Mitnehmer 33 (mindestens einer ist vorgesehen, bevorzugt aber sind mehrere in gleichen Winkelabständen über den jeweiligen Ring verteilt) stangenförmig und an der Unterseite in den Düsenring 25 eingeschraubt. Konusförmige untere Anschläge 34 dringen in der unteren Stellung des Gerätehalters 5, welche er während der Messung einnimmt, in dazu komplementäre Konuslöcher 35 als Anschlag und Gegenanschlag ein. An der Oberseite tragen die Mitnehmer 33 Anschlagköpfe 36, die gegebenenfalls justierbar auf einen Stangenabschnitt 37 aufgeschraubt sein können. Somit legt die Länge dieses Stangenabschnittes 37 die Relativbewegungsmöglichkeit zwischen Gerätehalter 5 und Waschring 14a fest, bis entweder die zentrierenden Konusanschläge 34 in die Konuslöcher 35 eindringen und eine weitere Relativbewegung des Gerätehalters 5 nach unten verhindern oder - in umgekehrter Richtung - die Anschlagköpfe 36 an der Oberseite des in die Öffnung 5' eingesetzten becherförmigen Halteringes 15 anschlagen und dann den Waschring 14a nach oben mitnehmen. Damit ist also ein gesonderter Antrieb für den Waschring 14a entbehrlich. Es versteht sich, daß die Zentrierung der Öffnung des Waschringes 14a zu der Öffnung 6 des Gerätehalters 5 auch anders, und insbesondere durch gesonderte Zentrierzapfen und -löcher, erfolgen könnte, daß aber angesichts der beengten Platzverhältnisse die Verwendung der Mitnehmer 33 für diesen Zweck besonders günstig ist. Auf diese Weise genügt ein einziger Motor 13 für den Antrieb beider Teile 5 und 14a, wogegen die elektrischen Teile 13', 21' und die Bügel 7' samt der Spindel 12' wegfallen. Dies vereinfacht die Konstruktion. Ebenso wird die Konstruktion dadurch vereinfacht, daß die länglichen Geräte von einem gemeinsamen Waschring 14 bzw. 14a umgeben sind, denn an sich wäre es ja auch denkbar jedem Gerät oder je einer Gruppe von ihnen einen gesonderten Waschring zuzuordnen.

Der gemäß Fig. 3 mit dem Zuführring 24 verschraubte Düsenring 25 besitzt eine mit der Achse des becherförmigen Halteringes 15 zweckmäßig koaxiale Durchtrittsöffnung 38, durch die sämtliche Geräte vorzugsweise gemeinsam durchgesteckt werden, obwohl es theoretisch möglich wäre, wie beim Haltering 15, gesonderte Durchstecklöcher vorzusehen. Dies würde aber die Handhabung erschweren und den Platzbedarf vergrößern. Anderseits ist es ebenso möglich, zwei oder mehr Waschringe vorzusehen und im einen eine gemeinsame große Durchstecköffnung, in einem anderen mehrere einzelne Durchstecklöcher vorzusehen.

Von dieser Durchstecköffnung 38 ausgehend verbreitert sich die lichte Weise des Waschringes 14a nach oben über eine Konusfläche 39. An diese sich erweiternde Konusfläche 39 schließt sich eine steilere Trichterfläche 40 (Fig. 4) an, die im unteren Bereich einen Kranz von Waschdüsen 41 aufweist. Diese Waschdüsen 41 liegen also in einer gewissen Entfernung zu den durch die Durchstecköffnung 38 (Fig. 3) hindurchgesteckten Meßelektroden oder Röhrchen 17 und andere, aus Fig. 4 ersichtliche längliche Meßsonden 17', so daß sich der Strahl der Waschdüsen 41 über diese Entfernung aufweiten und so einen größeren Flächenbereich der in der Mitte zusammengefaßten Geräte 17, 17' besprühen kann. Somit sitzt, vorzugsweise jede, Waschdüse 41 des Waschringes 14a an einem die vom Gerät durchsetzte Öffnung 38 und ihren Durchmesser d übersteigenden Durchmesser D. Die Vergrößerung des Durchmessers von d nach D läßt aber auch die Unterbringung einer größeren Anzahl von Waschdüsen 41 zu. Dabei ist es vorteilhaft, wenn die Düsen 41 am Waschring einen Winkelabstand von mindestens 10° und weniger als 180°, vorzugsweise von 15 bis 20°, besitzen. Um eine Waschung von allen Seiten vornehmen zu können, ist jedenfalls vorteilhaft die Ausbildung so getroffen, daß mindestens zwei Waschdüsen 41 einander im wesentlichen gegenüberliegen.

Wie ferner aus Fig. 4 ersichtlich ist, ist jede Waschdüse 41 des Waschringes 14a nicht nur radial einwärts, sondern auch um einen vorbestimmten Winkel α zur Vertikalachse V (die auch die Bewegungsachse ist) abwärts gerichtet. Der Winkel α beträgt vorzugsweise etwa 15° bis 40°, insbesondere 20° bis 30°. Dies hat mehrere Gründe. Zum einen verlängert sich dadurch die Strecke bis zu den Geräten 17, 17', in welcher sich der Waschstrahl aufzuweiten vermag. Sodann kann damit der Kranz der Waschdüsen 41 an einem größeren Durchmesser D angeordnet werden, da ja die Konusfläche 39 auch eine gewisse Höhe zum Aufweiten benötigt. Damit gelangt aber der Kranz der Waschdüsen 41 bereits in eine Höhe bezüglich der Geräte 17, 17', in deren Ebene eine Waschung nicht mehr sinnvoll ist, denn wie der Verlauf der in Fig. 4 strich-punktierten Achse A der Waschdüsen 41 zeigt, gelangt der Waschstrahl knapp unterhalb die in den Durchstecköffnungen 16 steckenden Köpfe der Geräte 17, 17', d.h. auf die tatsächlich mit der zu testenden Probe in Berührung kommenden Schaftteile derselben. Dazu kommt, daß durch den leicht abwärts gerichteten Waschstrahl etwaige Verschmutzungen besser gelöst und abwärts getrieben werden.

Man ersieht aus dem Schnitt der Fig. 3 und 4, daß die Waschdüsen 41 von der inneren Trichterfläche 40 nach außen hin von einem Verteilkanal 42 ausgehen. Dieser Verteilkanal 42 steht mit dem Zufuhrkanal 29 gemäß Fig. 3 über mindestens einen (vorzugsweise nur einen) Querkanal 43 in Verbindung und führt über 360° rund um den Düsenring 25, ist also vorteilhaft als Ringkanal 42 ausgebildet. An sich wäre es aber auch möglich, den Verteilkanal 42 - ausgehend von der Einmündung des Querkanales 43 - in zwei Armen über jeweils weniger als 180° verlaufen zu lassen. Dies ist jedoch aus fertigungstechnischen Gründen nicht bevorzugt. Wie oben bereits erläutert, könnte der Verteilkanal 42 über seine Länge unterschiedliche Querschnittsflächen besitzen, da ja der Druck zu den Düsen 41 von der Einmündung des Querkanales 43 weg infolge der durch die dort angeordneten ersten Waschdüsen 41 abfließenden Waschflüssigkeit zu den gegenüberliegenden Waschdüsen mehr oder weniger kontinuierlich abnehmen wird. Dieser Druckabfall ist aber in der Praxis nicht bedeutend, weshalb man den Verteilkanal 42 zweckmäßig mit gleichförmigem Querschnitt über seine Länge ausführt. Zwar könnten Anwendungsfälle auftreten, in denen man bewußt einen größeren Druck bei einzelnen Waschdüsen 41 haben will und aus diesem Grund den Querschnitt des Verteilkanales 42 über seine Länge verändert; aber auch dies wird bei den meisten Anwendungsfällen nicht die bevorzugte Ausführung sein.

Im Rahmen der Erfindung wäre es aber auch durchaus möglich, wenigstens zwei Kränze von Waschdüsen 41 übereinander anzuordnen, wodurch sie gegebenenfalls enger gestaffelt werden können, und ihnen jeweils einen Verteilkanal 42 zuzuordnen.

Wie ersichtlich, ist der Querschnitt des Verteilkanales 42 im Vergleich zu dem der Waschdüsen 41 relativ groß, um eine große Zahl von Waschdüsen 41 versorgen zu können. Es hat sich gezeigt, daß der durchschnittliche Querschnitt des Verteilkanales 42 gegenüber dem der Düsen 41 selbst dann größer sein soll, wenn nur eine, sich beispielsweise um die Achse V drehende Waschdüse vorgesehen wäre. Für eine solche Drehung des Düsenringes 25 gegenüber dem Zuführring 24 würde sich aber die Abdichtung, die hier durch bloße O-Ringe 27, 28 gegeben ist, teurer gestalten wozu die Kosten des Antriebes kämen. Vorzugsweise beträgt das Verhältnis des Querschnittes des Verteilkanales 42 zu dem der Waschdüsen 41 wenigstens 5:1 und liegt insbesondere in einem Verhältnisbereich von 10:1 bis 50:1. Dabei wurde oben bereits erwähnt, warum der Durchmesser der Waschdüsen 41 vorteilhaft mindestens 0,3 mm, vorzugsweise 0,5 mm und insbesondere 0,5 bis 0,8 mm betragen soll.

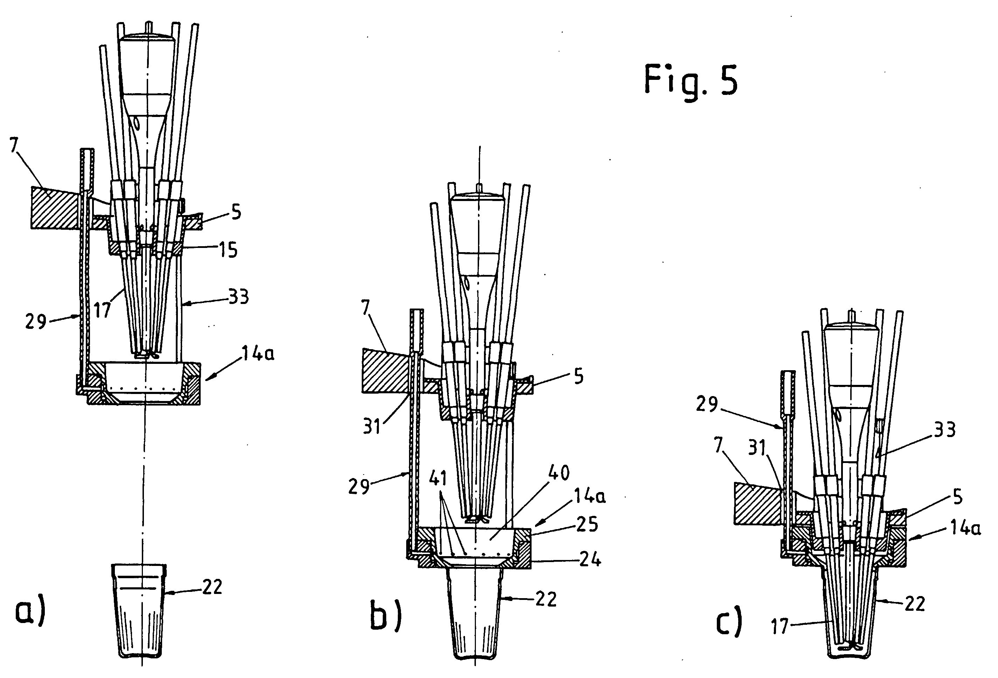

Wie bereits erwähnt, ist es vorteilhaft, wenn der aus Fig. 1 ersichtliche Programmspeicher m ein Programm gespeichert enthält, das nun - unter der Annahme, es sei entsprechend der Ausführungsform der Fig. 2 bis 4 nur ein einziger, gemeinsamer Antriebsmotor 13 vorgesehen - an Hand der Fig. 5 beschrieben werden soll. An sich wäre die Waschung auf verschiedene Weise durchführbar, beispielsweise im Falle der Fig. 1, indem der Gerätehalter 5 in eine Probe abgesenkt wird und dann aufwärts fährt. Der Waschring 14 könnte dann ebenfalls aufwärts fahren und schon dabei und gegebenenfalls in einer Auf- und Abwärtsbewegung die Geräte 17, 17' mehrmals absprühen. Bevorzugt ist jedoch das folgende Vorgehen.

Ausgehend von der Stellung nach Fig. 5 a), in der sich der Gerätehalter 5 samt den von ihm im Haltering 15 gehaltenen Meßelektroden oder Röhrchen 17 oberhalb des Waschringes 14a befindet und letzterer durch die Mitnehmer 33 in einer vorbestimmten Entfernung vom Gerätehalter 5 gehalten ist, erfolgt zunächst ein Absenken von Gerätehalter 5 und Waschring 14a gemeinsam bis zu einer jeweils gewünschten Höhe, die durch die Höhe eines darunterstehenden Probenglases 22 gegeben ist. Diese Position ist in Fig. 5 b) dargestellt. Die gewünschte Höhe für den Gerätehalter 5 ist jedoch - nach dem Abstützen des Waschringes 14a am oberen Rand des Glases 22 - etwas tiefer gelegen, d.h. der Gerätehalter fährt so weit abwärts, bis seine Meßelektroden 17 in das Glas 22 und die darin befindliche flüssige, zu testende Probe eintauchen. Diese Stellung ist aus Fig. 5 c) ersichtlich. Dabei schieben sich die Mitnehmerstangen 33 durch die aus Fig. 4 ersichtlichen Öffnungen im Anschlusse an die Konusöffnungen 35 hindurch nach oben. Ebenso verschiebt sich der Zuführkanal 29 in seiner Bohrung 31 des Gerätehalters 5 nach oben.

Sodann erfolgt Durchführung der Messung. Diese wird zweckmäßig vom Computer 19 (Fig. 1) über das Signalsammelkabel 18 (Fig. 1 und 2) ausgelöst, die Meßsignale vom Computer registriert und ausgewertet und schließlich ein Signal "Ende der Messung" abgegeben. Dieses Signal läuft über eine Ausgangsleitung 44 zum Mikroprozessor, der die Überwachung der Bewegung von Gerätehalter 5 und Waschring 14a besorgt, wogegen der Computer 19 ausschließlich für die Überwachung, Durchführung und Auswertung der Messung zuständig ist. Es versteht sich aber, daß beide Prozessoren 19 und µ in einem ausgeführt sein können und dann der Mikroprozessor µ Teil des Computers 19 ist.

Ist also die durch Tastendruck, Maus-Klick od.dgl. am Computer 19 begonnene Messung beendet, so erfolgt die Bewegung der Teile 5 und 14a in umgekehrter Richtung, d.h. - bezogen auf Fig. 5 - von c) nach a). Bedingt durch die vereinfachte Ausführung mit den Mitnehmern 33 wird sich also der Gerätehalter 5 erst nach oben bewegen, während der Waschring 14a noch am Rande des Glases 22 liegen bleibt. Dies hat durchaus seinen Vorteil, denn der Düsenring 25 besitzt ja eine relativ hohe Trichterfläche 40 oberhalb des Kranzes der Düsen 41, die ein Herausspritzen von Waschflüssigkeit auch dann verhindern würde, wären die Waschdüsen 41 nicht um den Winkel α schräg abwärts geneigt.

Während sich also die Geräte 17, 17' vertikal relativ zum Waschring 14a nach oben bewegen, hat der Mikroprozessor µ, gesteuert vom Programm des Programmspeichers m, die gleichzeitige Zuführung von Waschflüssigkeit über den Kanal 29 von einem nicht dargestellten Waschflüssigkeitsvorrat und über einen an den Zufuhrkanal 29 angeschlossenen (ebenfalls nicht dargestellten) Schlauch ausgelöst. Die aufwärts bewegten Geräte 17, 17' werden somit bei der Bewegung von Fig. 5 c) nach Fig. 5 b) von oben bis unten abgesprüht und gewaschen und tropfen in das Glas 22 ab. Anschließend könnte das Glas 22 von Hand aus unter Anheben des Waschringes 14a entfernt werden, doch ist es günstiger, wenn Gerätehalter 5 und Waschring 14a nach der Position nach Fig. 5 b), insbesondere gemeinsam, in eine vorbestimmte Ausgangslage nach Fig. 5 a) hebbar sind, so daß mehr Freiraum zum Hantieren mit dem Probenglas 22 bleibt.

Es versteht sich, daß das eben beschriebene Programm der Antriebsvorrichtung auch für den Betrieb des Segner'schen Wasserrades nach dem Stande der Technik nützlich sein könnte, obwohl es bzw. sie für die erfindungsgemäße Analysenvorrichtung ausgelegt und einsetzbar ist.

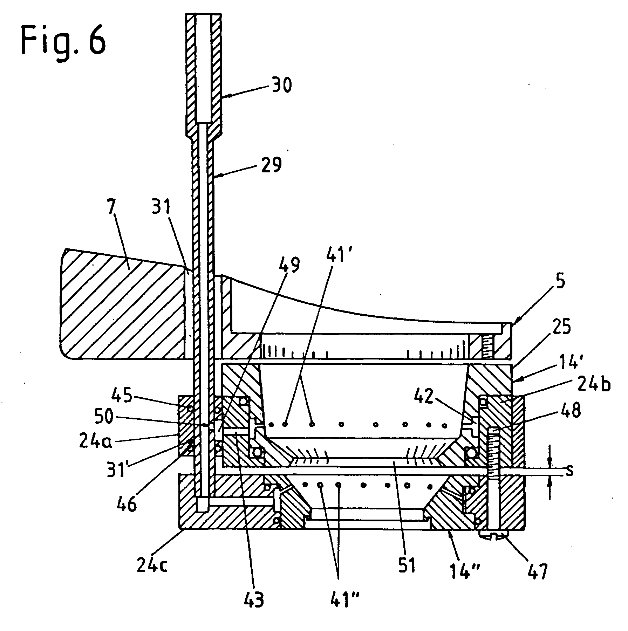

Es kann erwünscht sein, die Waschung der Geräte zu intensivieren oder zu modifizieren. Zu diesem Zweck kann eine Ausführung gemäß Fig. 6 mit (mindestens) zwei Waschringen 14', 14" vorgesehen werden. Dabei durchsetzt der Zufuhrkanal 29 wie im Falle der Fig. 3 die Bohrung 31 des Gerätehalters 5. Der Zufuhrkanal 29 durchsetzt aber auch eine enge Bohrung 31' in einem äußeren Zuführring 24a, in der er mit Hilfe zweier Dichtungen, wie O-Ringen, 45, 46 abgedichtet ist. Am unteren Ende mündet der Zufuhrkanal 29 in den Zuführring 24c des weiteren Waschringes 14".

Die Waschringe 14', 14" können sich um ein geringes Maß s relativ zueinander bewegen. Dieses Maß s ist durch die Länge mindestens einer, vorteilhaft mehrerer, Führungsschrauben 47 vorgegeben, die zur Justierung gegebenenfalls mehr oder weniger in ein Schraubloch 48 eines inneren Zuführringes 24b eingeschraubt werden können. Wie ersichtlich ist an der Außenseite des inneren Zuführringes 24b der äußere Zuführring 24a aufgeschraubt. Die Di/chtungen 45, 46 können dabei so ausgebildet werden, daß sie sowohl gegenüber dem Zufuhrkanal 29 als auch zwischen den beiden Ringen 24a, 24b wirken, andernfalls können aber auch gesonderte Dichtungen vorgesehen werden.

Der äußere Zuführring 24a weist wie in Fig. 3 die sich axial erstreckende Kammer 49 auf, von der ein Radialkanal 43' über den Verteilkanal 42 zu den Düsen 41' führt. Die Kammer 49 steht mit einer radialen Auslaßöffnung 50 des Zufuhrkanales 29 in Verbindung und ist so bemessen, daß diese Öffnung 50 in jeder Relativlage entlang des Weges s in die Kammer 49 einmündet. Dagegen ist die Verbindung mit dem unteren Waschring 14" in derselben Weise gelöst, wie beim Ausführungsbeispiel nach Fig. 3. Damit werden beide Waschringe 14', 14" vom selben Zufuhrkanal 29 mit Waschflüssigkeit beliefert. Wie ersichtlich, sind die Düsen 41" des unteren Waschringes 14" im dargestellten Ausführungsbeispiel schräg nach oben gerichtet, so daß die Flüssigkeitsstrahlen der Düsenreihe 41' und 41" bei eng aneinanderliegenden Waschringen 14', 14" etwa auf dieselbe oder einander nahe benachbarte Stellen gerichtet sind. Um dies zu begünstigen, weist der obere Waschring 14' eine sich nach unten hin erweiternde Konizität 51 auf.

Bei einer solchen Kombination von Waschringen 14', 14" sind verschiedene Ausbildungen denkbar. Es könnte beispielsweise jeder Waschring einen nur ihm zugeordneten Zufuhrkanal 29 aufweisen, so daß beispielsweise jeder Waschring eine andere Waschflüssigkeit versprüht. Ferner könnten die Düsenkränze 41' und 42" bezüglich einer Vertikalebene gegeneinander so versetzt sein, daß sie (bezüglich der Vertikalebene) auf Lücke stehen. Auf diese Weise können die Flüssigkeitsstrahlen insgesamt enger um die Geräte und deren Außenumfang geführt werden. Selbstverständlich ist es nicht nötig, die beiden Waschstrahlen der Düsen 41' und der Düsen 41" gegeneinander zu richten, und es ist gegebenenfalls auch möglich, daß etwa beide Düsenreihen abwärts gerichtet sind. Ferner könnte es in Einzelfällen erwünscht sein, daß etwa die Düsen 41' nur in einem Teilkreis, insbesondere einem Halbkreis, angeordnet sind, wogegen der Rest des Umfanges von den Düsen 41" besprüht wird. Ferner ist es klar, daß jeder Waschring, an Stelle eines einzigen Kranzes von vom Verteilkanal 42 ausgehenden Düsen 41, auch deren mehrere haben könnte, wobei beispielsweise eine obere Reihe von Düsen aufwärts, eine untere Reihe von Düsen abwärts gerichtet sind.

Es ist ersichtlich, daß bei der Ausführung nach Fig. 6 die Schrauben 47 als Mitnehmer wirken, so daß ein gesonderter Antrieb für die beiden Waschringe 14', 14" vermieden wird; gewünschtenfalls aber können solche gesonderten Antriebe insbesondere dann vorgesehen werden, wenn gezielt Relativbewegungen zwischen den beiden Waschringen auszuführen sind.

## Patentansprüche

1. Analysenvorrichtung mit einer Vertikalführung (2), einem daran geführten Gerätehalter (5) und mindestens einer Wascheinrichtung für wenigstens ein vom Gerätehalter (5) gehaltenes Gerät (17, 17'), welche mindestens eine Waschdüse (41) aufweist, durch welche eine über eine Zufuhreinrichtung (24, 29, 42, 43) zugeführte Waschflüssigkeit auf das jeweilige Gerät (17, 17') sprühbar ist, **dadurch gekennzeichnet, daß** die Wascheinrichtung an mindestens einem vom Gerätehalter (5) gesonderten und relativ zu ihm und zur Vertikalführung bewegbaren, das jeweilige vom Gerätehalter (5) gehaltene Gerät (17, 17') umrundenden Waschring (14; 14a; 14', 14") mit mindestens einer gegen das jeweilige, eine Öffnung (38) des jeweiligen Waschringes (14; 14a; 14', 14") durchsetzende Gerät (17, 17') gerichteter Waschdüse (41) angeordnet ist.

2. Vorrichtung nach Anspruch 1, **dadurch gekennzeichnet, daß** der jeweilige Waschring (14; 14a; 14', 14") über 360° verläuft und so das jeweilige, Gerät (17, 17') vollständig umgibt.

3. Vorrichtung nach Anspruch 1 oder 2, **dadurch gekennzeichnet, daß** der jeweilige Waschring (14; 14a; 14', 14") ebenfalls an der Vertikalführung (2) geführt ist.

4. Vorrichtung nach einem der vorhergehenden Ansprüche, **dadurch gekennzeichnet, daß** der jeweilige Waschring (14; 14a; 14', 14") unterhalb des Gerätehalters (5) angeordnet ist.

5. Vorrichtung nach einem der vorhergehenden Ansprüche, **dadurch gekennzeichnet, daß** der jeweilige Waschring (14; 14a; 14', 14") mit mindestens zwei über seinen Umfang verteilten Waschdüsen (41) versehen ist.

6. Vorrichtung nach Anspruch 5, **dadurch gekennzeichnet, daß** mindestens zwei Waschdüsen (41) voneinander einen im wesentlichen gleichen Winkelabstand besitzen.

7. Vorrichtung nach Anspruch 5 oder 6, **dadurch gekennzeichnet, daß** mindestens zwei Waschdüsen (41) einander im wesentlichen gegenüberliegen.

8. Vorrichtung nach einem der vorhergehenden Ansprüche, **dadurch gekennzeichnet, daß** die Düsen (41) am jeweiligen Waschring (14; 14a) einen Winkelabstand von mindestens 10° und weniger als 180°, vorzugsweise von 15 bis 20°, besitzen.

9. Vorrichtung nach einem der vorhergehenden Ansprüche, **dadurch gekennzeichnet, daß** die mindestens eine Waschdüse (41) mindestens eines Waschringes (14a) an einem die vom Gerät durchsetzte Öffnung (38) übersteigenden Durchmesser (D) angeordnet ist.

10. Vorrichtung nach einem der vorhergehenden Ansprüche, **dadurch gekennzeichnet, daß** mindestens ein Waschring (14a) eine Durchstecköffnung (38) besitzt, durch die alle vom Gerätehalter (5) gehaltenen Geräte (17, 17') hindurchragen.

11. Vorrichtung nach einem der vorhergehenden Ansprüche, **dadurch gekennzeichnet, daß** die mindestens eine Waschdüse (41) des jeweiligen Waschringes (14; 14a; 14', 14") einen Mindestdurchmesser von 0,3 mm, vorzugsweise von 0,5 mm, insbesondere einen Durchmesser von 0,5 bis 0,8 mm, besitzt.

12. Vorrichtung nach einem der vorhergehenden Ansprüche, **dadurch gekennzeichnet, daß** die mindestens eine Waschdüse (41) mindestens eines Waschringes (14; 14a; 14', 14") nicht nur radial einwärts, sondern auch um einen vorbestimmten Winkel (α) abwärts gerichtet ist.

13. Vorrichtung nach Anspruch 12, **dadurch gekennzeichnet, daß** der vorbestimmte Winkel (α) etwa 15° bis 40°, insbesondere 20° bis 30°, beträgt.

14. Vorrichtung nach einem der vorhergehenden Ansprüche, **dadurch gekennzeichnet, daß** der jeweilige Waschring (14; 14a; 14', 14") mit mindestens einem, seinem Umfang entlang laufenden, an die Zufuhreinrichtung (29) angeschlossenen Verteilkanal (42) für die Waschflüssigkeit versehen ist.

15. Vorrichtung nach Anspruch 14, **dadurch gekennzeichnet, daß** der durchschnittliche Querschnitt des Verteilkanals (42) gegenüber dem der mindestens einen Düse (41) größer ist, vorzugsweise in einem Verhältnis von wenigstens 5:1, insbesondere in einem Verhältnisbereich von 10:1 bis 50:1.

16. Vorrichtung nach einem der vorhergehenden Ansprüche, **dadurch gekennzeichnet, daß** mindestens zwei untereinander liegende Reihen von Düsen (41', 41") vorgesehen sind (Fig. 6).

17. Vorrichtung nach Anspruch 16, **dadurch gekennzeichnet, daß** die Reihen von Düsen jeweils auf unterschiedlichen Waschringen (14', 14") angeordnet sind.

18. Vorrichtung nach Anspruch 17, **dadurch gekennzeichnet, daß** die Waschringe (14', 14") relativ zueinander bewegbar sind.

19. Vorrichtung nach einem der vorhergehenden Ansprüche, **dadurch gekennzeichnet, daß** die Zufuhreinrichtung einen mindestens teilweise etwa parallel zur vertikalen Bewegungsrichtung (V) erstreckten Zufuhrkanal (29) aufweist.

20. Vorrichtung nach einem der vorhergehenden Ansprüche, **dadurch gekennzeichnet, daß** der Gerätehalter (5) Halter (15) für wenigstens zwei Geräte (17, 17') aufweist, die der jeweilige Waschring (14; 14a) gemeinsam umgibt.

21. Vorrichtung nach einem der vorhergehenden Ansprüche, **dadurch gekennzeichnet, daß** eine Zentriereinrichtung (34, 35) zwischen Gerätehalter (5) und Waschring(en) (14a) vorgesehen ist (Fig. 4).

22. Vorrichtung nach einem der vorhergehenden Ansprüche, **dadurch gekennzeichnet, daß** der Gerätehalter (5) mittels eines Antriebes (12, 13) entlang der Vertikalführung (2) bewegbar ist, und daß der jeweilige Waschring (14; 14a) vorzugsweise mittels desselben Antriebes (12, 13) vertikal bewegbar ist.

23. Vorrichtung nach Anspruch 22, **dadurch gekennzeichnet, daß** Gerätehalter (5) und Waschring(e) (14; 14a) untereinander durch wenigstens einen eine Relativbewegung zulassenden Mitnehmer (33) verbunden sind.

24. Vorrichtung nach einem der Ansprüche 1 bis 23, **dadurch gekennzeichnet, dass** diese eine Antriebsvorrichtung umfasst, welche mindestens einen von einer Programmsteuereinrichtung (m, µ) gesteuerten Motor (13, 13') aufweist..

25. Vorrichtung nach Anspruch 24, **dadurch gekennzeichnet, daß** die Programmsteuereinrichtung (m, µ) einen Programmspeicher (m) für die Durchführung wenigstens folgender Schritte aufweist:
a) Absenken von Gerätehalter (5) und Waschring (14; 14a; 14', 14") bis zu einer jeweils gewünschten Höhe;
b) Durchführung der Messung;
c) vertikales Relativbewegen des mindestens einen Gerätes (17, 17') am Gerätehalter (5) gegenüber dem Waschring (14; 14a; 14', 14") bei gleichzeitiger Zuführung von Waschflüssigkeit.

26. Vorrichtung nach Anspruch 25, **dadurch gekennzeichnet, daß** ein Meßwertaufnehmer, z.B. ein Speicher, ein Computer (19) oder Prozessor, vorgesehen ist, der den Abschluß der Messung überwacht und nach Durchführung des Schrittes b) ein Signal zur Auslösung des Schrittes c) abgibt.

27. Vorrichtung nach Anspruch 25 oder 26, **dadurch gekennzeichnet, daß** im Schritt a) der Waschring (14; 14a; 14', 14") bis zu einer ersten vorbestimmten Höhe führbar ist, wogegen sich der Gerätehalter (5) bis zu einer zweiten vorbestimmten Höhe absenkt.

28. Vorrichtung nach einem der Ansprüche 25 bis 27, **dadurch gekennzeichnet, daß** Gerätehalter (5) und Waschring (14; 14a; 14', 14") nach dem Schritt c), insbesondere gemeinsam, in eine vorbestimmte Ausgangslage hebbar sind (Fig. 5a)).

## Revendications

1. Dispositif d'analyse comprenant un guide vertical (2), un support d'outils (5) guidé dessus et au moins un système de lavage pour au moins un appareil (17, 17') maintenu par le support d'appareils (5), qui présente au moins une buse de lavage (41) par laquelle un liquide de lavage amené par un système d'alimentation (24, 29, 42, 43) peut être pulvérisé sur l'appareil concerné (17, 17'), **caractérisé en ce que** le système de lavage est disposé sur au moins une bague de lavage (14 ; 14a ; 14' ; 14'') séparée du support d'appareils (5) et pouvant être déplacée par rapport à lui et au guide vertical (2) entourant l'appareil (17, 17') respectif maintenu par le support d'appareils (5) avec au moins une buse de lavage (41) orientée vers l'appareil (17, 17') concerné traversant une ouverture (38) de la bague de lavage respectif (14 ; 14a ; 14' ; 14'').

2. Dispositif selon la revendication 1, **caractérisé en ce que** la bague de lavage (14 ; 14a ; 14' ; 14'') concernée est agencée sur 360° et entoure ainsi complètement l'appareil concerné (17, 17').

3. Dispositif selon la revendication 1 ou 2, **caractérisé en ce que** la bague de lavage concernée (14 ; 14a ; 14' ; 14'') est guidée également sur le guide vertical (2).

4. Dispositif selon l'une quelconque des revendications précédentes, **caractérisé en ce que** la bague de lavage concernée (14 ; 14a ; 14' ; 14'') est disposée au-dessous du support d'appareils (5).

5. Dispositif selon l'une quelconque des revendications précédentes, **caractérisé en ce que** la bague de lavage concernée (14 ; 14a ; 14' ; 14'') est pourvue d'au moins deux buses de lavage (41) réparties sur son pourtour.

6. Dispositif selon la revendication 5, **caractérisé en ce qu'**au moins deux buses de lavage (41) présentent entre elles un espacement angulaire sensiblement identique.

7. Dispositif selon la revendication 5 ou 6, **caractérisé en ce qu'**au moins deux buses de lavage (41) se font face sensiblement.

8. Dispositif selon l'une quelconque des revendications précédentes, **caractérisé en ce que** les buses (41) présentent sur la bague de lavage concernée (14 ; 14a) une distance angulaire d'au moins 10° et de moins de 180°, de préférence de 15 à 20°.

9. Dispositif selon l'une quelconque des revendications précédentes, **caractérisé en ce que** la au moins une buse de lavage (41) d'au moins une bague de lavage (14a) est disposée sur un diamètre (D) dépassant de l'ouverture (38) traversée par l'appareil.

10. Dispositif selon l'une quelconque des revendications précédentes, **caractérisé en ce qu'**au moins une bague de lavage (14a) présente une ouverture de passage (38), par laquelle tous les appareils (17, 17') maintenus par le support d'appareils (5) dépassent.

11. Dispositif selon l'une quelconque des revendications précédentes, **caractérisé en ce que** la au moins une buse de lavage (41) de la bague de lavage concernée (14 ; 14a ; 14' ; 14'') présente un diamètre minimum de 0,3 mm, de préférence de 0,5 mm, en particulier un diamètre de 0,5 à 0,8 mm.

12. Dispositif selon l'une quelconque des revendications précédentes, **caractérisé en ce que** la au moins une buse de lavage (41) d'au moins une bague de lavage (14 ; 14a ; 14' ; 14'') est orientée non seulement radialement vers l'entrée, mais également d'un angle (α) prédéfini vers le bas.

13. Dispositif selon la revendication 12, **caractérisé en ce que** l'angle (α) prédéfini est d'environ 15° à 40°, en particulier de 20° à 30°.

14. Dispositif selon l'une quelconque des revendications précédentes, **caractérisé en ce que** la bague de lavage concernée (14 ; 14a ; 14' ; 14'') est pourvue d'au moins un canal répartiteur (42) longeant son pourtour et raccordé au système d'alimentation (29) pour le liquide de lavage.

15. Dispositif selon la revendication 14, **caractérisé en ce que** la section moyenne du canal répartiteur (42) est plus grande par rapport à celle d'au moins une buse (41), de préférence dans un rapport d'au moins 5:1, en particulier dans une plage de rapport de 10:1 jusqu'à 50:1.

16. Dispositif selon l'une quelconque des revendications précédentes, **caractérisé en ce qu'**au moins deux rangées superposées de buses (41', 41'') sont prévues (figure 6).

17. Dispositif selon la revendication 16, **caractérisé en ce que** les rangées de buses sont disposées chacune sur différentes bagues de lavage (14', 14'').

18. Dispositif selon la revendication 17, **caractérisé en ce que** les bagues de lavage (14', 14'') peuvent être déplacées l'une par rapport à l'autre.

19. Dispositif selon l'une quelconque des revendications précédentes, **caractérisé en ce que** le système d'arrivée présente un canal d'arrivée (29) étiré au moins en partie à peu près parallèlement au sens de déplacement (V) vertical.

20. Dispositif selon l'une quelconque des revendications précédentes, **caractérisé en ce que** le support d'appareils (5) présente des supports (15) pour au moins deux appareils (17, 17') que la bague de lavage (14 ; 14a) concernée entoure conjointement.

21. Dispositif selon l'une quelconque des revendications précédentes, **caractérisé en ce qu'**un système de centrage (34, 35) est prévu entre le support d'appareils (5) et la(les) bague(s) de lavage (14a) (figure 4).

22. Dispositif selon l'une quelconque des revendications précédentes, **caractérisé en ce que** le support d'appareils (5) peut être déplacé au moyen d'un entraînement (12, 13) le long du guide vertical (2) et **en ce que** la bague de lavage (14 ; 14a) respective peut être déplacée verticalement de préférence au moyen du même entraînement (12, 13).

23. Dispositif selon la revendication 22, **caractérisé en ce que** le support d'appareils (5) et la(les) bague(s) de lavage (14 ; 14a) sont reliées entre eux par au moins un entraîneur (33) autorisant un déplacement relatif.

24. Dispositif selon l'une quelconque des revendications 1 à 23, **caractérisé en ce que** celui-ci présente un dispositif d'entraînement qui présente au moins un moteur (13, 13') commandé par un dispositif de commande de programme (m, µ).

25. Dispositif selon la revendication 24, **caractérisé en ce que** le dispositif de commande de programme (m, µ) présente une mémoire de programme (m) pour la réalisation d'au moins les étapes suivantes :
a) abaissement du support d'appareils (5) et de la bague de lavage (14 ; 14a ; 14' ; 14'') jusqu'à une hauteur souhaitée respective ;
b) réalisation de la mesure ;
c) déplacement relatif vertical du au moins un appareil (17, 17') sur le support d'appareils (5) par rapport à la bague de lavage (14 ; 14a ; 14' ; 14'') avec une arrivée simultanée de liquide de lavage.

26. Dispositif selon la revendication 25, **caractérisé en ce qu'**il est prévu un enregistreur de valeur de mesure, par exemple une mémoire, un ordinateur (19) ou un processeur, lequel contrôle l'achèvement de la mesure et envoie après l'exécution de l'étape b) un signal pour le déclenchement de l'étape c).

27. Dispositif selon la revendication 25 ou 26, **caractérisé en ce que**, lors de l'étape a), la bague de lavage (14 ; 14a ; 14' ; 14'') peut être guidée jusqu'à une première hauteur prédéfinie, alors que le support d'appareils (5) s'abaisse jusqu'à une seconde hauteur prédéfinie.

28. Dispositif selon l'une quelconque des revendications 25 à 27, **caractérisé en ce que** le support d'appareils (5) et la bague de lavage (14 ; 14a ; 14' ; 14'') peuvent être soulevés après l'étape c), en particulier ensemble, dans une position de repos prédéfinie (figure 5a).

## Claims

1. Analyzer system with a vertical guide (2), an instrument holder (5) constrained to move along the vertical guide (2) and at least one washing device for an instrument (17, 17') held by the instrument holder (5), the washing device having at least one wash jet nozzle (41) operable to spray wash fluid supplied through a supply device (24, 29, 42, 43) on the instrument (17, 17'), **characterized in that** the washing device is arranged on at least one wash ring (14; 14a; 14', 14") that is separate from the instrument holder and movable in relation to the instrument holder and to the vertical guide (2), said wash ring (14; 14a; 14', 14") surrounding the instrument (17, 17') held by the instrument holder (5) and having at least one wash jet nozzle (41) aimed at the instrument (17, 17') which extends through an opening (38) of said wash ring (14; 14a; 14', 14").

2. System according to claim 1, **characterized in that** the wash ring (14; 14a; 14', 14") extends over an angle of 360° and thus completely surrounds the instrument (17, 17').

3. System according to claim 1 or 2, **characterized in that** the wash ring (14; 14a; 14', 14") is likewise constrained for guided movement along the vertical guide (2).

4. System according to one of the preceding claims, **characterized in that** the wash ring (14; 14a; 14', 14") is disposed below the instrument holder (5).

5. System according to one of the preceding claims, **characterized in that** the wash ring (14; 14a; 14', 14") is equipped with at least two wash jet nozzles (41) distributed over the circumference of the wash ring (14; 14a; 14', 14").

6. System according to claim 5, **characterized in that** at least two wash jet nozzles (41) are disposed at substantially equal angular intervals.

7. System according to claim 5 or 6, **characterized in that** at least two wash jet nozzles (41) are disposed substantially at diametrically opposite locations.

8. System according to one of the preceding claims, **characterized in that** the wash jet nozzles (41) are disposed on the wash ring (14; 14a) at angular intervals of at least 10° and less than 180°, preferably 15° to 20°.

9. System according to one of the preceding claims, **characterized in that** the at least one jet nozzle (41) of at least one wash ring (14a) is disposed on a circumference of larger diameter (D) than the opening (38) occupied by the instrument.

10. System according to one of the preceding claims, **characterized in that** at least one wash ring (14a) has an insertion opening (38) that is traversed by all of the instruments (17, 17') held by the instrument holder (5).

11. System according to one of the preceding claims, **characterized in that** the at least one wash jet nozzle (41) of the wash ring (14; 14a; 14', 14") has a diameter of at least 0.3 mm, preferably at least 0.5 mm, and with particular preference 0.5 to 0.8 mm.

12. System according to one of the preceding claims, **characterized in that** the at least one wash jet nozzle (41) of at least one wash ring (14; 14a; 14', 14"), in addition to being aimed in a radially inward direction, is also aimed at a predetermined downward angle (α).

13. System according to claim 12, **characterized in that** the predetermined angle (α) is substantially between 15° and 40°, in particular between 20° and 30°.

14. System according to one of the preceding claims, **characterized in that** the at least one wash ring (14; 14a; 14', 14") has a distributor channel (42) for the wash fluid extending along a perimeter of said wash ring and connected to the supply device (29).

15. System according to claim 14, **characterized in that** the average cross-sectional area of the distributor channel (42) is larger than the cross-sectional area of the at least one jet nozzle (41), preferably in a ratio of at least 5:1 and with particular preference in a range of ratios between 10:1 and 50:1.

16. System according to one of the preceding claims, **characterized by** having at least two rows of jet nozzles (41', 41"), arranged one below the other (Fig. 6).

17. System according to claim 16, **characterized in that** the rows of jet nozzles are arranged on respectively different wash rings (14', 14").

18. System according to claim 17, **characterized in that** the wash rings (14', 14") are movable in relation to each other.

19. System according to one of the preceding claims, **characterized in that** the supply device comprises a supply channel (29) extending at least in part substantially parallel to the direction (V) of vertical movement.

20. System according to one of the preceding claims, **characterized in that** the instrument holder (5) comprises holders (15) for at least two instruments (17, 17') surrounded in common by the wash ring (14; 14a).

21. System according to one of the preceding claims, **characterized in that** a centering device (34, 35) is provided between the instrument holder (5) and the one or more wash rings (14a) (Fig. 4).

22. System according to one of the preceding claims, **characterized in that** the instrument holder (5) is movable along the vertical guide (2) by means of a drive mechanism (12, 13) and that the wash ring (14; 14a) is vertically movable preferably by means of the same drive mechanism (12, 13).

23. System according to claim 22, **characterized in that** the instrument holder (5) and one or more wash rings (14; 14a) are interconnected through at least one take-along constraint (33) allowing a degree of relative movement to take place.

24. System according to one of the claims 1 to 23, **characterized in that** the system comprises a drive mechanism which includes at least one motor (13, 13') controlled by a programmed controller device (m, µ).

25. System according to claim 24, **characterized in that** the programmed controller device (m, µ) comprises a memory device (m) holding a program designed to perform at least the steps of:
a) lowering the instrument holder (5) and the wash ring (14; 14a; 14', 14") to a desired level;
b) performing a measurement;
c) vertically moving the at least one instrument (17, 17') in the instrument holder (5) in relation to the wash ring (14; 14a; 14', 14") while simultaneously supplying wash fluid.

26. System according to claim 25, **characterized in that** a measuring signal receiver is provided, e.g., a memory storage device, a computer (19) or a processor, which monitors the completion of the measurement and, when it finds step b) to be completed, delivers a signal to initiate step c).

27. System according to claim 25 or 26, **characterized in that** in step a), the wash ring (14; 14a; 14', 14") can be lowered to a first predetermined height, while the downward movement of the instrument holder (5) is continued to a second predetermined height.

28. System according to one of the claims 25 to 27, **characterized in that**, after step c) has been completed, the instrument holder (5) and the wash ring (14; 14a; 14', 14") are operable to be raised, particularly in a joint movement, to a predetermined starting position (Fig. 5a)).
